# EUROPEAN PATENT SPECIFICATION

(11) **EP 4 418 818 B1**
(45) Date of publication and mention of the grant of the patent: **19.11.2025**
(21) Application number: 23157385.8
(22) Date of filing: 17.02.2023
(51) Int. Cl.: H05B 6/06

(54) **INDUCTION HOB**
INDUKTIONSKOCHFELD
PLAQUE DE CUISSON À INDUCTION

(43) Date of publication of application: 21.08.2024
(73) Proprietor: Whirlpool Corporation, Benton Harbor, MI 49022 (US)
(72) Inventor: Baldo, Salvatore, 21024 Cassinetta di Biandronno (VA) (IT); Barbati, Mario, 21024 Cassinetta di Biandronno (VA) (IT); Gallivanoni, Andrea, 21024 Cassinetta di Biandronno (VA) (IT); Sperone, Silvio, 21024 Cassinetta di Biandronno (VA) (IT)
(74) Representative: PGA S.p.A., Milano, Succursale di Lugano

(56) References cited:
- JP-A- 2006 294 392
- JP-A- 2008 159 358
- JP-A- 2010 219 071
- JP-B2- 5 188 488
- CARRETERO C ET AL: "First harmonic equivalent impedance of coupled inductive loads for induction heating applications", IECON 2012 - 38TH ANNUAL CONFERENCE ON IEEE INDUSTRIAL ELECTRONICS SOCIETY, IEEE, 25 October 2012 (2012-10-25), pages 427 - 432, XP032281138, ISBN: 978-1-4673-2419-9, DOI: 10.1109/IECON.2012.6388784

## Description

### TECHNICAL FIELD

The present disclosure relates to an induction hob having one or more induction heating coils, wherein each induction heating coil is connected between two capacitors to form a C-L-C resonant tank.

### BACKGROUND

Cooking appliances, in particular induction cooking appliances, have at least one main switching converter to supply induction heating elements with a regulated supply power generated from a main energy supply, and an energy storage unit, in particular a bus capacitor, provided for smoothing bus voltage variations by charging/discharging a capacitor. Switching converters may be used as AC current generators (inverters) for induction cooktops, for powering heating coils magnetically coupled with pots/pans.

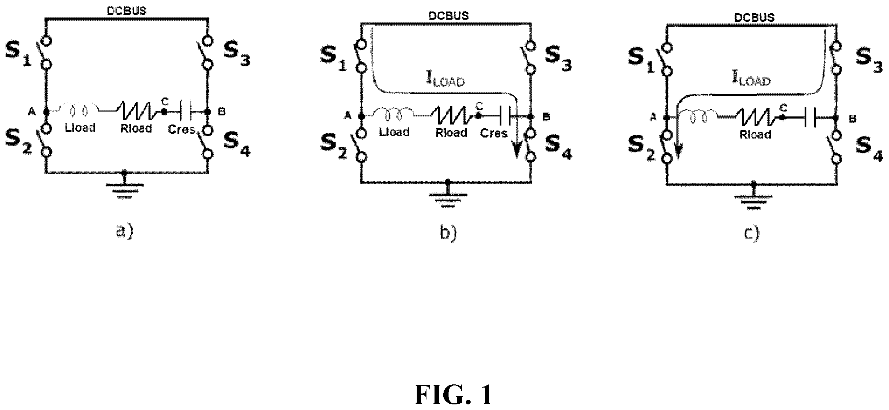

In induction cooktops typically the load is a series resonant circuit composed of a capacitor and an inductor, wherein the inductor represents the induction coil and the pot placed on the cooktop surface above it. A typical driving of a full bridge inverter is illustrated in figures 1a-1c. The topology consists of two legs connected between the DCBUS and ground nodes, each of which comprises two switching devices. A resonant load is connected between the two intermediate terminals of each half-bridge stage, as shown in Figure 1 a). In normal operation, the switching devices in a full bridge topology are switched ON and OFF in a definite pattern. Referring to Figure 1 a), S1 and S2 will never be activated at the same time, and similarly S3 and S4 will never be activated at the same time, otherwise a short-circuit of the DCBUS would be created. On the other hand, switching devices that are located diagonally in different legs are activated at the same time to have current flowing through the load, in this case the resonant series of an inductor and a capacitor. Referring to Figure 1 b), S1 and S4 will be turned on at the same time to have current flow through the load; after a predetermined amount of time, S1 and S4 are turned off, and S2 and S3 are turned on, as shown in Figure 1 c). This way, the current through the load will flow in the opposite direction as before, thus creating an alternating current through the load at a frequency corresponding to the switching frequency of the devices. In this case, the load is a series resonant circuit composed of a capacitor and an inductor plus a resistor, which represents the induction coil and the pot placed on the cooktop surface above it.

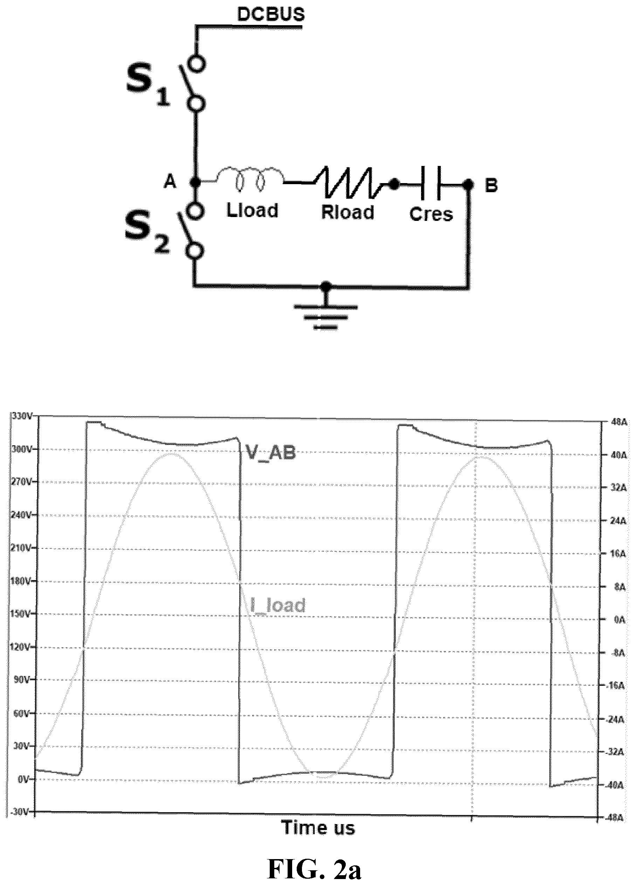

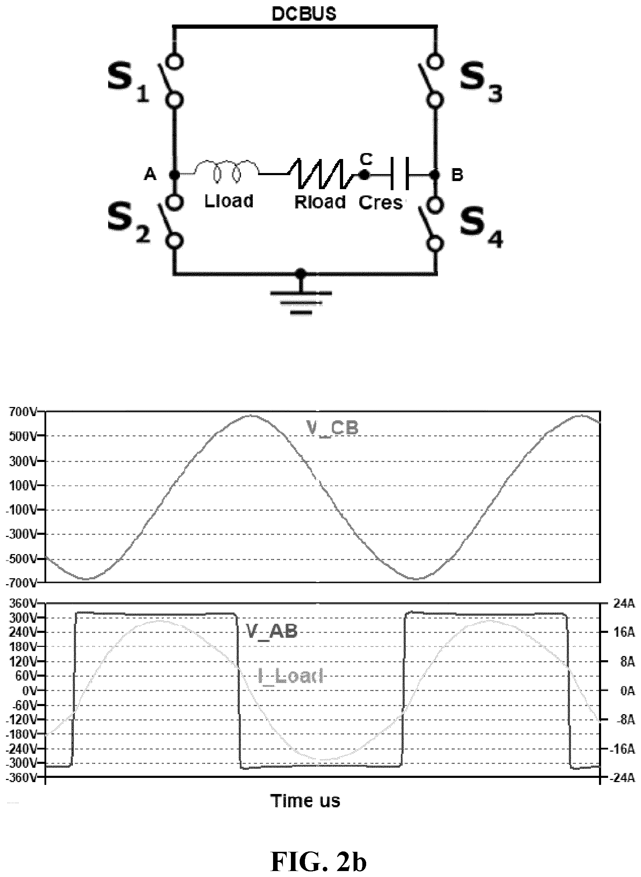

A half bridge topology is depicted in figure 2a and a full bridge topology is depicted in figure 2b, with respective exemplary time graphs at the bottom. The sample time graphs have been obtained by simulation at 230 VAC (peak of DCBUS of 325 V), with a load model formed by an inductance of 62 µH and a resistance of 5 Ω for the half bridge case and 20 Ω for full bridge case, with a capacitor of 220 nF for each case. The value of the equivalent resistance changes to have the same power in both cases. The depicted signals represent the current circulating in the resonant load and the voltage across the resonant load (V_AB) and across the capacitor Cres1 (V_CB). The working frequency is fixed around 44 kHz, which is about the resonance frequency of the equivalent RLC resonant load. Compared to the half bridge, one of the main advantages of the full bridge inverter is that the voltage across the load is doubled, because it alternately passes from DCBUS to DCBUS. A doubled voltage, with the same power, results in half the current, obtaining an improvement in efficiency compared to the half bridge. In the case of the half bridge, the current reaches about 40 A peak while in the case of the full bridge it reaches about 20 A. This happens because the voltage across the resonant load (V_AB) is double in the case of the full bridge. This leads to an increase in the efficiency of the system, since the dissipations depend on the circulating currents. However, the high voltage leads to the choice of a capacitor capable of working at that voltage, making the component more expensive and with lower efficiency.

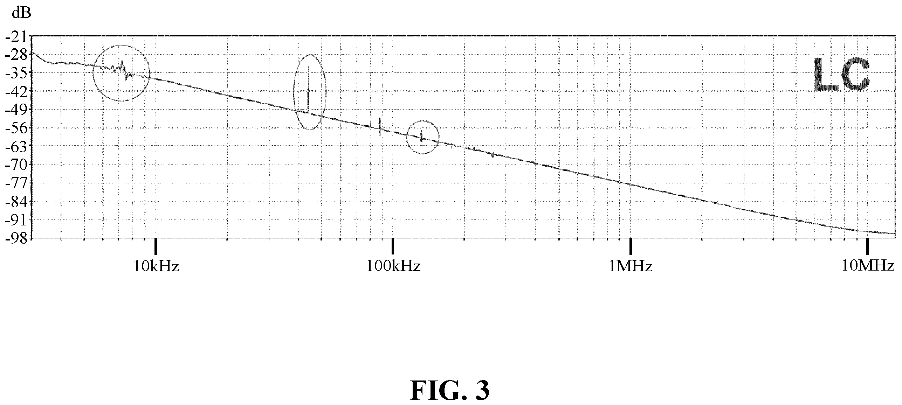

Tests carried out by the Applicant on an induction hob comprising the configuration of figure 2b for driving an induction coil of the induction hob, have shown a relevant amount of electromagnetic disturbance injected through the ground line of the induction hob. A diagram of the disturbance voltage injected through the ground line of the full-bridge stage is depicted by way of example in figure 3. Measures are taken at a fixed switching frequency. The vertical axis represents the amplitude in dB of the disturbance voltage injected into the main line.. The horizontal axis indicates the frequencies at which disturbances are observed. This disturbance voltage has a peak at the main switching frequency, which in the depicted graph is at about 44 kHz, and at its upper harmonics (88kHz, 132kHz, 176kHz, 220kHz, 264kHz). Unfortunately, the amplitude at the main switching frequency is about 20dB higher than the amplitude at frequencies around it, thus it would be desirable to reduce this undesired effect.

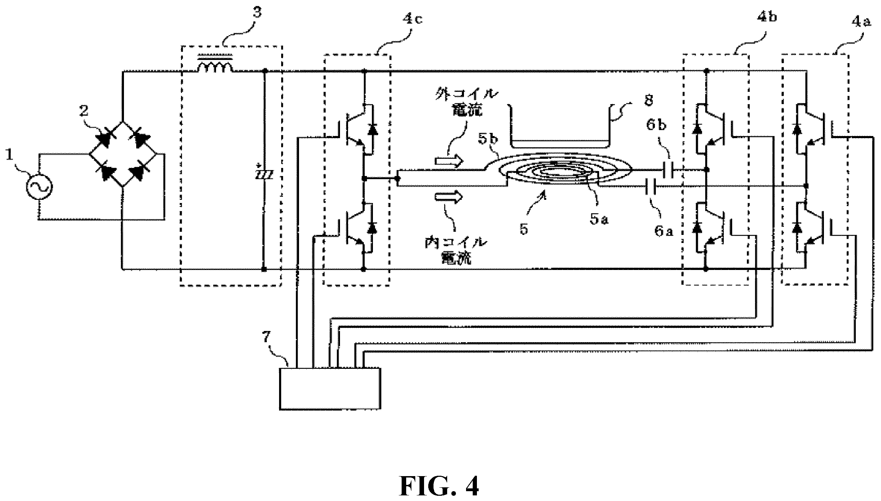

The Japanese patent publication JP2008-159358, upon the disclosure of which the preamble of claim 1 is drafted, discloses an induction hob with a switching stage as depicted in figure 4 in which two distinct induction heating coils are controlled by driving the master half-bridge stage 4c and the two slave half-bridge stages 4a and 4b. Also with this prior switching stage the disturbance injected through the ground line of the induction hob are relevant. Documents JP 2006 294392 A, JP 2010 219071 A and JP 5 188488 B2 disclose other induction cooking hobs according to the state of the art.

### SUMMARY

Tests carried out by the Applicant lead to conclude that the cause of the disturbance that are injected through the ground line of induction hobs using a full-bridge switching converter, may be caused by parasitic capacitances between the ground line and the connection lines to the heating coil of the induction hob. In order to solve at least partially this inconvenience, an induction hob as defined in claim 1 has been devised in which all half-bridge switching stages and the respective capacitors directly connected thereto are all installed on a same circuit board. Thanks to this configuration, a C-L-C topology is obtained allowing to reduce EMI disturbances.

Other embodiments are defined in the enclosed claims.

### BRIEF DESCRIPTION OF THE DRAWINGS

Figures 1a-1c illustrate a typical driving of a resonant R-L-C load by means of a full bridge switching stage.
Figure 2a depicts a half-bridge topology configured to supply a R-L-C resonant load and exemplary time graphs of voltages and current.
Figure 2b depicts a full-bridge topology configured to supply a R-L-C resonant load and exemplary time graphs of voltages and current.
Figure 3 depicts a diagram of a disturbance voltage injected through the ground line observed between 0 and 10MHz of the full-bridge stage of figure 2b.
Figure 4 depicts a prior art switching stage.
Figure 5 depicts the full-bridge topology of figure 2b and examples of waveforms of voltages across the coil with respect to ground that inject disturbances through the ground line.
Figure 6a depicts a full-bridge topology for an induction hob according to an aspect of this disclosure with two capacitors and exemplary time graphs of voltages and current, wherein each capacitor is directly connected to the intermediate terminal of a respective half-bridge stage.
Figure 6b depicts the full-bridge topology of figure 6a and examples of waveforms of voltages across the coil with respect to ground that inject disturbances through the ground line.
Figure 7 depicts a diagram of a disturbance voltage injected through the ground line observed between 0 and 10MHz of the full-bridge stage of figure 6b.
Figure 8 depicts multiple full-bridge stages for an induction hob according to an aspect of this disclosure.
Figure 9 depicts multiple full-bridge stages for an induction hob according to an aspect of this disclosure, comprising a single master half-bridge stage and a plurality of slave half-bridge stages for powering a plurality of induction heating coils.
Figure 10 depicts multiple full-bridge stages for an induction hob according to an aspect of this disclosure, comprising a first plurality of "m" master half-bridge stage and a second plurality of "n" slave half-bridge stages for powering a plurality of "n*m" induction heating coils.

### DESCRIPTION OF EXEMPLARY EMBODIMENTS

Without being bound to a theory, the Applicant believes that a cause of the relevant amount of disturbance current injected through the ground line may be due to the parasitic capacitances between the ground line and the connection lines to the heating coil of an induction hob. Unfortunately, parasitic capacitances between the terminals of an induction heating coil and the ground line are unavoidable. For instance, in the case of a metallic outer case connected to the ground line, the parasitic capacitances between the induction coil terminals and the ground line of the power supply cable generate leakage currents resulting in disturbances of the power line.

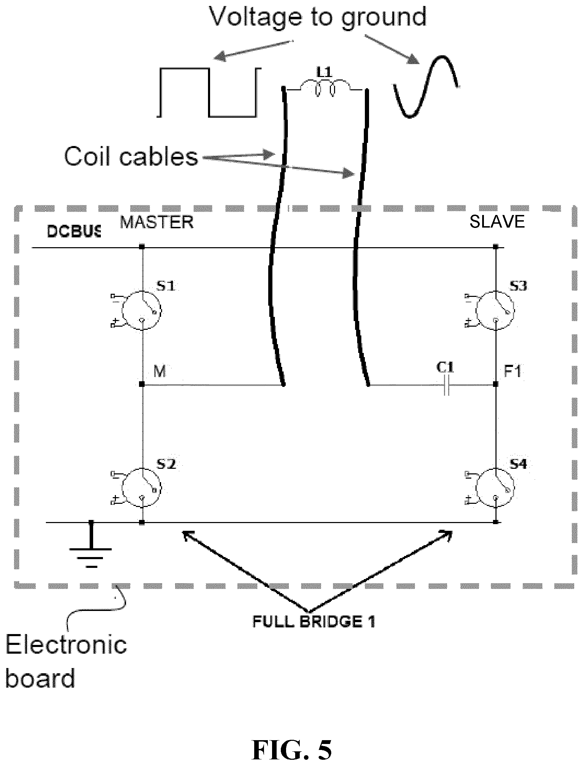

However, it is possible to reduce the disturbance current injected through the ground line. Figure 5 depicts the full-bridge topology of figure 2b and an example of the waveforms of voltages across the coil with respect to ground that inject disturbances through the ground line. Clearly, by using the well known L-C resonant configuration, the waveforms of the voltages to ground at the terminals of the induction heating coil are very different from each other: the voltage to ground is a square wave at the terminal of the coil directly connected to the half-bridge stage, whilst it has a lesser harmonic content at the other terminal of the coil connected to the other half-bridge switching stage through the capacitor. Therefore, the harmonic content of the square-wave voltage to ground at one terminal is not balanced by the harmonic content of the voltage to ground at the other terminal and this will cause circulation through the ground line of a relevant disturbance current.

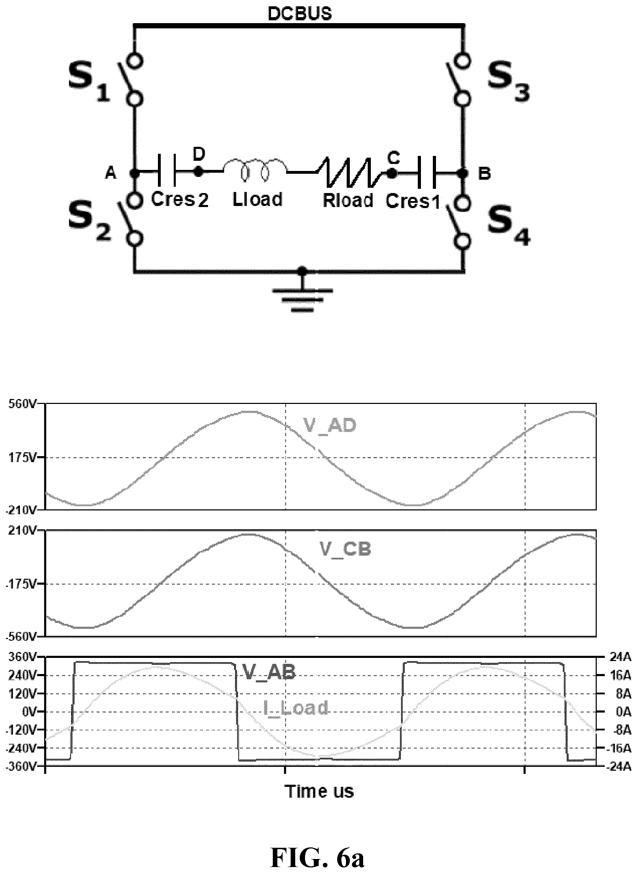

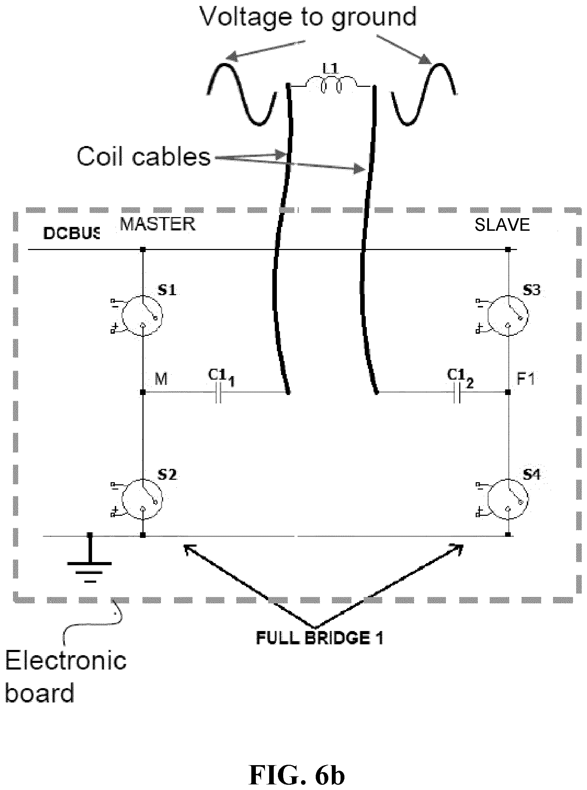

According to an aspect of the present disclosure, it is possible to power the induction heating coil using the circuit in figure 6a and 6b, which has a full bridge topology with two capacitors wherein each capacitor is directly connected to the intermediate terminal of a respective half-bridge stage to form a C-L-C resonant element. Thanks to the presence of two capacitors that couple respective terminals of the induction heating coil to the intermediate terminal of the respective half-bridge switching stage, the voltages to ground at the terminals of the induction heating coil have a lesser harmonic content than a square-wave voltage and thus they will cause circulation of a reduced disturbance current through the ground line. In a configuration where each one of the two capacitors is installed on a same electronic board with the respective half-bridge switching stage and the electronic board(s) is(are) electrically shielded from the ground line and from the parts of the induction hob eventually connected thereto, the square-wave voltages at the intermediate nodes of the switching stages will have a limited effect on the generation of a disturbance current through the ground line.

According to an aspect of the disclosure, the capacitors C of the same resonant load preferably have matched values so that the voltages on the capacitors are balanced, as schematically shown at the bottom of figure 6a. The simulation data are the same as in figure 2b and the signals represent the voltage across the intermediate terminals of the half-bridge stages, the total current flowing through the load, the voltage across the capacitor Cres 1 (V_CB) and the voltage across the second capacitor Cres 2 (V_AD). As a further advantage, the voltage across the capacitors is reduced, for example it is reduced from a peak of about 700V to about 500V, thus voltage isolation requirements may be more easily satisfied.

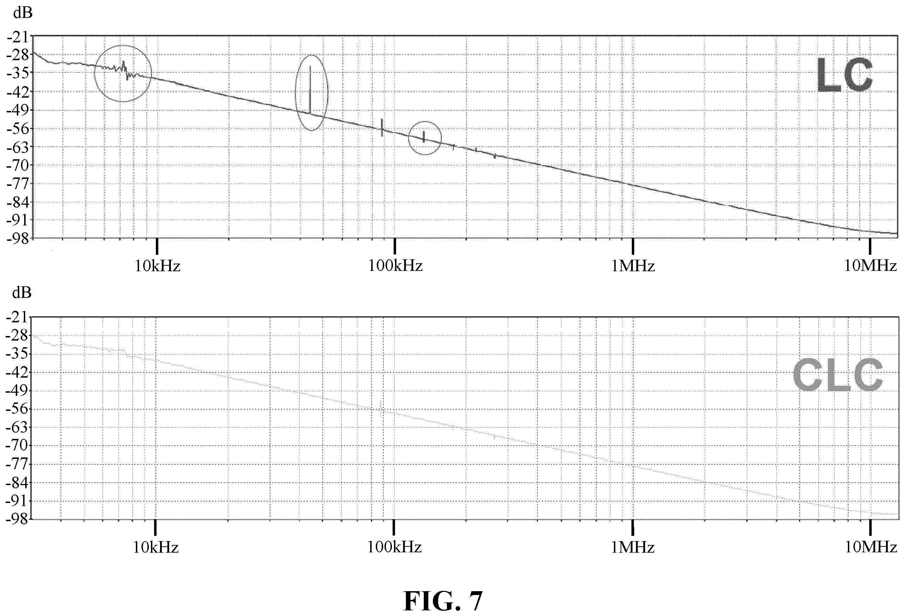

In the embodiment shown in figure 6b, the capacitors, which for example may be installed on a same electronic board or may be installed each one on a respective electronic board with the respective half-bridge stage, have matched values and the voltages to ground at the terminals of the induction heating coil are balanced, thus their effect on the generation of the disturbance current are at least partially balanced. A test carried out by the Applicant on the configuration of figure 6b using matched capacitors, showed that the annoying disturbance on the ground line highlighted in the graph of figure 3 are substantially canceled, as shown in the corresponding graph of figure 7.

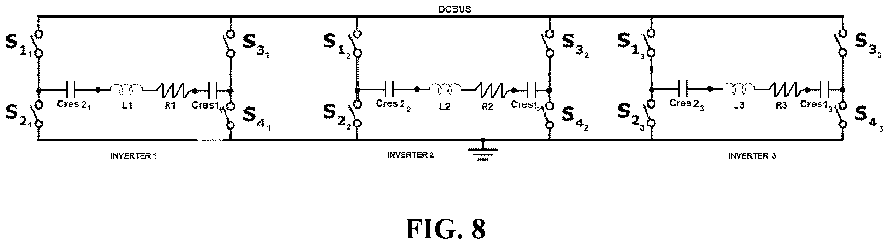

The present invention may be generalized in a multi inverter system, in which it is possible to have more than one full bridge with a corresponding C-L-C resonant tank sharing the same DCBUS, as shown in figure 8. Considering a three-phase system, in which it is possible to obtain three different DCBUSs, one for each phase, it is possible to generalize the topology in figure 8 in which for each DCBUS it is possible to have many C-L-C full bridges based on the number of coils to be energized. Of course, the maximum number of converters connected to the same DCBUS depends on the maximum power limitations of the individual inverters and the electrical network. Also in this case, the capacitors will be installed on the same electronic board as the half-bridge stages, whilst only the induction heating coil will be installed out of it.

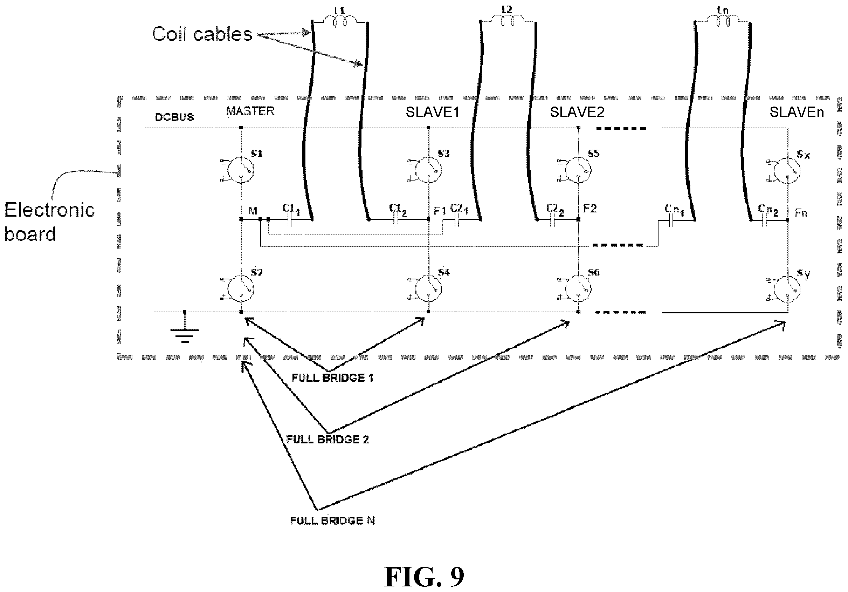

Figure 9 shows a possible cost saving solution for powering a number "n" of induction heating coils. This topology consists of a half-bridge stage, which is configured to act as a Master stage, and "n" secondary half-bridge stages, as many as there are coils in the system, wherein the secondary half-bridge stages are configured to act as Slave stages. For example, if the second coil (L2) is to be supplied, the Master and the slave half-bridge stage (SLAVE 2) connected to the second coil will be turned on, so as to obtain a full bridge structure for that coil, with a resonant load formed by the first capacitor C21 connected to the master half-bridge stage, the coil L2 and the second capacitor C22 connected to the slave half-bridge stage. If the first and second coils (L1 and L2) are to be supplied, the Master half-bridge stage will be shared between the slave half-bridge stages SLAVE1 and SLAVE2, obtaining a resonant load C11-L1-C12 for coil 1 and C21-L2-C22 for coil 2.

The number of converters and coils depends:
- on the final dimensions of the product;
- on the maximum power limitations of the individual inverters;
- on the power limitations of the electrical network.

Compared to the configuration in figure 8, in this case there are considerable cost savings because there are less half-bridge stages.

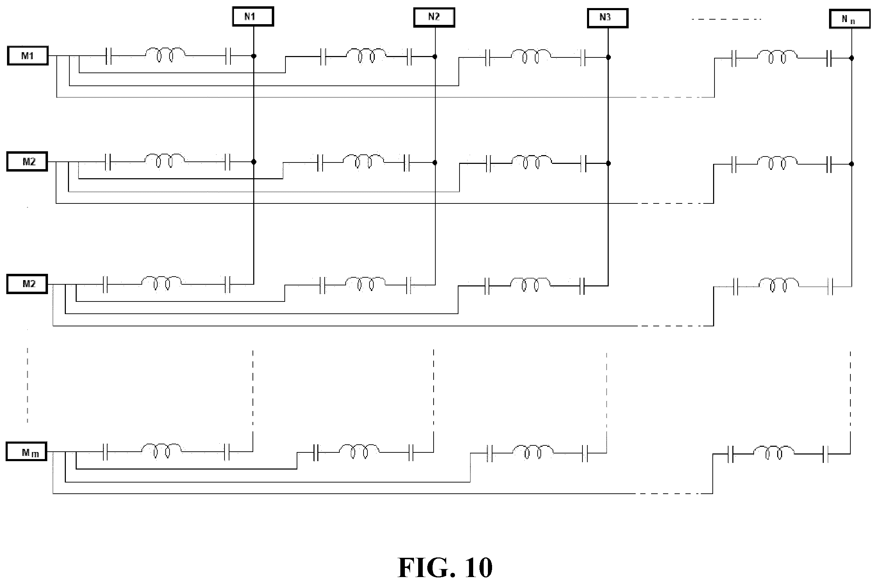

The topology in Figure 9 may be generalized by obtaining a matrix structure as in Figure 10, where the single converter blocks (M and N) are half-bridge stages. For example, let us suppose there is a unique DC BUS from the electrical network. **In** this case, it could be possible to have a matrix system connected to the DC BUS, with M half-bridge stages configured to act as master half-bridge stages, and N half-bridge switching stages each of which is configured to act as a slave half-bridge stage. According to one aspect, each one of the M master half-bridge stages is operably coupled to each one of the N slave half-bridge stages through a C-L-C resonant tank. **In** this case, a system with MxN coils is obtained in which each coil of the MxN coils is connected between one master half-bridge stage and one slave half-bridge stage.

## Claims

1. An induction hob, comprising at least one heating induction coil (L1), a switching converter, wherein the switching converter comprises:
- a DC-bus having a high-side line and a low side line for making available a DC voltage on said DC-bus between said high-side line and said low-side line,
- a plurality of half-bridge switching stages, connected electrically in parallel between said high-side line and said low-side line, each half-bridge switching stage of said plurality of half-bridge switching stages comprising a respective high-side controlled switch ( S1, S3) and low-side controlled switch (S2, S4) connected in series between them and sharing an intermediate current terminal (M, F1) of the half-bridge switching stage,
- at least one C-L-C resonant tank connected between two intermediate current terminals of two half-bridge switching stages of said plurality of half-bridge switching stages, wherein said C-L-C resonant tank comprises the induction heating coil (L1) and capacitors, wherein each capacitor (C1₁, C1₂) of said capacitors is connected in series to the induction heating coil (L1) and to the intermediate current terminal of a respective half-bridge switching stage of said plurality of half-bridge switching stages, wherein said C-L-C resonant tank is configured to be magnetically coupled with a respective load, thereby defining at least a first resonant tank,
**characterized in that**
the intermediate current terminal of each half-bridge switching stage of said plurality of half-bridge switching stages is directly connected to a respective capacitor of said capacitors;
each half-bridge switching stage of said plurality of half-bridge switching stages and the respective capacitor directly connected thereto are installed on a same circuit board;
said at least one C-L-C resonant tank is composed by said heat induction coil (L) electrically connected in series between said two capacitors (C) installed on said circuit board.

2. The induction hob of claim 1, wherein said capacitors of a same resonant tank have substantially matched capacitance values.

3. The induction hob of any of the preceding claims, wherein said plurality of half-bridge switching stages comprises one half-bridge switching stage configured to act as a master half-bridge switching stage and one half-bridge switching stages configured to act as slave half-bridge switching stages, wherein the C-L-C resonant tank is connected at one end to the current terminal of said master half-bridge switching stage and at the other end to the current terminal of said slave half-bridge switching stage and the resonant tank comprises a first induction heating coil.

4. The induction hob of claim 3, wherein said plurality of half-bridge switching stages further comprises at least a second half-bridge switching stage configured to act as a slave half-bridge stage, wherein said induction hob comprises at least a second C-L-C resonant tank, said at least second C-L-C resonant tank being connected between the intermediate current terminal of said master half-bridge switching stage and the intermediate current terminal of the second slave half-bridge switching stage and comprising a respective second induction heating coil.

5. The induction hob of claim 4, comprising a first plurality of "M" half-bridge switching stages each of which is configured to act as a master half-bridge stage and a second plurality of "N" half-bridge switching stages each of which is configured to act as a slave half-bridge stage, wherein said induction hob comprises "M*N" C-L-C resonant tanks, each C-L-C resonant tank of said C-L-C resonant tank being powered by a respective pair composed of a master half-bridge switching stage of said first plurality and of a slave half-bridge switching stage of said second plurality, said C-L-C resonant tank being connected between the intermediate current terminal of the master half-bridge switching stage of said respective pair and the intermediate current terminal of the slave half-bridge switching stage of said respective pair, wherein each C-L-C resonant tank comprises a respective induction heating coil.

## Patentansprüche

1. Induktionskochfeld, umfassend zumindest eine Heizinduktionsspule (L1), einen Schaltwandler,
wobei der Schaltwandler umfasst:
- einen DC-Bus mit einer High-Side-Leitung und einer Low-Side-Leitung zur Bereitstellung einer DC-Spannung auf dem DC-Bus zwischen der High-Side-Leitung und der Low-Side-Leitung,
- eine Mehrzahl von Halbbrückenschaltstufen, die elektrisch parallel zwischen die High-Side-Leitung und die Low-Side-Leitung geschaltet sind, wobei jede Halbbrückenschaltstufe der Mehrzahl von Halbbrückenschaltstufen einen jeweiligen High-Side-gesteuerten bzw. -geregelten Schalter (S1, S3) und einen Low-Side-gesteuerten bzw. geregelten Schalter (S2, S4) umfasst, die in Reihe dazwischengeschaltet sind und sich einen Zwischenstromanschluss (M, F1) der Halbbrückenschaltstufe teilen,
- zumindest einen C-L-C-Resonanztank bzw. -kreis, der zwischen zwei Zwischenstromanschlüssen zweier Halbbrückenschaltstufen der Mehrzahl von Halbbrückenschaltstufen geschaltet ist, wobei der C-L-C-Resonanzkreis die Induktionsheizspule (L1) und Kondensatoren umfasst, wobei jeder Kondensator (C1₁, C1₂) der Kondensatoren in Reihe mit der Induktionsheizspule (L1) und dem Zwischenstromanschluss einer jeweiligen Halbbrückenschaltstufe der Mehrzahl von Halbbrückenschaltstufen geschaltet ist, wobei der C-L-C-Resonanzkreis konfiguriert ist, magnetisch mit einer jeweiligen Last gekoppelt zu sein, wodurch zumindest ein erster Resonanzkreis definiert ist,
**dadurch gekennzeichnet, dass**
der Zwischenstromanschluss jeder Halbbrückenschaltstufe der Mehrzahl von Halbbrückenschaltstufen direkt mit einem jeweiligen Kondensator der Kondensatoren verbunden ist;
jede Halbbrückenschaltstufe der Mehrzahl von Halbbrückenschaltstufen und der jeweilige direkt damit verbundene Kondensator auf derselben Leiterplatte installiert sind;
der zumindest eine C-L-C-Resonanzkreis aus der Wärmeinduktionsspule (L) besteht, die zwischen die beiden auf der Leiterplatte installierten Kondensatoren (C) elektrisch in Reihe geschaltet ist.

2. Induktionskochfeld nach Anspruch 1, wobei die Kondensatoren eines selben Resonanzkreises im Wesentlichen übereinstimmende Kapazitätswerte aufweisen.

3. Induktionskochfeld nach einem der vorhergehenden Ansprüche, wobei die Mehrzahl von Halbbrückenschaltstufen eine Halbbrückenschaltstufe, die konfiguriert ist, als eine Master-Halbbrückenschaltstufe zu wirken, und eine Halbbrückenschaltstufe umfassen, die konfiguriert ist, als eine Slave-Halbbrückenschaltstufe zu wirken, wobei der C-L-C-Resonanzkreis an einem Ende mit dem Stromanschluss der Master-Halbbrückenschaltstufe und an dem anderen Ende mit dem Stromanschluss der Slave-Halbbrückenschaltstufe verbunden ist und der Resonanzkreis eine erste Induktionsheizspule umfasst.

4. Induktionskochfeld nach Anspruch 3, wobei die Mehrzahl von Halbbrückenschaltstufen ferner zumindest eine zweite Halbbrückenschaltstufe umfassen, die konfiguriert ist, als eine Slave-Halbbrückenstufe zu wirken, wobei das Induktionskochfeld zumindest einen zweiten C-L-C-Resonanztank bzw. - kreis umfasst, wobei der zumindest zweite C-L-C-Resonanzkreis zwischen den Zwischenstromanschluss der Master-Halbbrückenschaltstufe und den Zwischenstromanschluss der zweiten Slave-Halbbrückenschaltstufe geschaltet ist und eine jeweilige zweite Induktionsheizspule umfasst.

5. Induktionskochfeld nach Anspruch 4, umfassend eine erste Mehrzahl von "M" Halbbrückenschaltstufen, von denen jede konfiguriert ist, als eine Master-Halbbrückenstufe zu wirken, und eine zweite Mehrzahl von "N" Halbbrückenschaltstufen, von denen jede konfiguriert ist, als eine Slave-Halbbrückenstufe zu wirken, wobei das Induktionskochfeld "M*N" C-L-C-Resonanzkreise umfasst, wobei jeder C-L-C-Resonanzkreis des C-L-C-Resonanzkreises von einem jeweiligen Paar gespeist wird, das aus einer Master-Halbbrückenschaltstufe der ersten Mehrzahl und einer Slave-Halbbrückenschaltstufe der zweiten Mehrzahl besteht, wobei der C-L-C-Resonanzkreis zwischen den Zwischenstromanschluss der Master-Halbbrückenschaltstufe des jeweiligen Paars und den Zwischenstromanschluss der Slave-Halbbrückenschaltstufe des jeweiligen Paars geschaltet ist, wobei jeder C-L-C-Resonanzkreis eine jeweilige Induktionsheizspule umfasst.

## Revendications

1. Cuisinière par induction, comprenant au moins une bobine de chauffage par induction (L1), un convertisseur de commutation,
dans laquelle le convertisseur de commutation comprend :
- un bus DC ayant une ligne côté haut et une ligne côté bas pour rendre disponible une tension DC sur ledit bus DC entre ladite ligne côté haut et ladite ligne côté bas,
- une pluralité d'étages de commutation en demi-pont, électriquement connectés en parallèle entre ladite ligne côté haut et ladite ligne côté bas, chaque étage de commutation en demi-pont de ladite pluralité d'étages de commutation en demi-pont comprenant un commutateur contrôlé côté haut (S1, S3) respectif et un commutateur contrôlé côté bas (S2, S4) connectés en série entre eux et partageant une borne de courant intermédiaire (M, F1) de l'étage de commutation en demi-pont,
- au moins un puits résonant C-L-C connecté entre deux bornes de courant intermédiaires de deux étages de commutation en demi-pont de ladite pluralité d'étages de commutation en demi-pont, dans laquelle ledit puits résonant C-L-C comprend la bobine de chauffage par induction (L1) et des condensateurs, dans laquelle chaque condensateur (C1₁, C1₂) desdits condensateurs est connecté en série à la bobine de chauffage par induction (L1) et à la borne de courant intermédiaire d'un étage de commutation en demi-pont respectif de ladite pluralité d'étages de commutation en demi-pont,
dans laquelle ledit puits résonant C-L-C est configuré pour être magnétiquement couplé à une charge respective, définissant ainsi au moins un premier puits résonant,
**caractérisée en ce que**
la borne de courant intermédiaire de chaque étage de commutation en demi-pont de ladite pluralité d'étages de commutation en demi-pont est directement connectée à un condensateur respectif desdits condensateurs ;
chaque étage de commutation en demi-pont de ladite pluralité d'étages de commutation en demi-pont et le condensateur respectif directement connecté à celui-ci sont installés sur une même carte de circuit ;
ledit au moins un puits résonant C-L-C est composé par ladite bobine d'induction de chaleur (L) électriquement connectée en série entre lesdits deux condensateurs (C) installés sur ladite carte de circuit.

2. Cuisinière par induction selon la revendication 1, dans laquelle lesdits condensateurs d'un même puits résonant présentent des valeurs de capacité qui correspondent sensiblement.

3. Cuisinière par induction selon l'une quelconque des revendications précédentes, dans laquelle ladite pluralité d'étages de commutation en demi-pont comprend un étage de commutation en demi-pont configuré pour agir comme étage de commutation en demi-pont maître et un étage de commutation en demi-pont configuré pour agir comme étages de commutation en demi-pont esclaves, dans laquelle le puits résonant C-L-C est connecté à une extrémité à la borne de courant dudit étage de commutation en demi-pont maître et à l'autre extrémité à la borne de courant dudit étage de commutation en demi-pont esclave et le puits résonant comprend une première bobine de chauffage par induction.

4. Cuisinière par induction selon la revendication 3, dans laquelle ladite pluralité d'étages de commutation en demi-pont comprend en outre au moins un second étage de commutation en demi-pont configuré pour agir comme étage en demi-pont esclave,
dans laquelle ladite cuisinière par induction comprend au moins un second puits résonant C-L-C, ledit au moins un second puits résonant C-L-C étant connecté entre la borne de courant intermédiaire dudit étage de commutation en demi-pont maître et la borne de courant intermédiaire du second étage de commutation en demi-pont esclave et comprenant une seconde bobine de chauffage par induction respective.

5. Cuisinière par induction selon la revendication 4, comprenant une première pluralité de « M » étages de commutation en demi-pont dont chacun est configuré pour agir comme étage en demi-pont maître et une seconde pluralité de « N » étages de commutation en demi-pont dont chacun est configuré pour agir comme étage en demi-pont esclave, dans laquelle ladite cuisinière par induction comprend « M*N » puits résonants C-L-C, chaque puits résonant C-L-C dudit puits résonant C-L-C étant alimenté par une paire respective composée d'un étage de commutation en demi-pont maître de ladite première pluralité et d'un étage de commutation en demi-pont esclave de ladite seconde pluralité, ledit puits résonant C-L-C étant connecté entre la borne de courant intermédiaire de l'étage de commutation en demi-pont maître de ladite paire respective et la borne de courant intermédiaire de l'étage de commutation en demi-pont esclave de ladite paire respective, dans laquelle chaque puits résonant C-L-C comprend une bobine de chauffage par induction respective.
